# EUROPEAN PATENT SPECIFICATION

(11) **EP 4 240 507 B1**
(45) Date of publication and mention of the grant of the patent: **05.08.2026**
(21) Application number: 21890026.4
(22) Date of filing: 04.11.2021
(51) Int. Cl.: B01D 19/00, B01D 21/24, B01D 21/26

(54) **COALESCING MEDIA FOR HYDRONIC AIR AND SEDIMENT SEPARATION DEVICE**
KOALESZENZMEDIUM FÜR HYDRONISCHE LUFT- UND SEDIMENTTRENNVORRICHTUNG
MILIEU COALESCENT POUR AIR HYDRONIQUE ET DISPOSITIF DE SÉPARATION DE SÉDIMENTS

(30) Priority: 04.11.2020 US 202063109472 P
(43) Date of publication of application: 13.09.2023
(73) Proprietor: Fluid Handling LLC, Morton Grove, Illinois 60053 (US)
(72) Inventor: TURTON, Thomas, West Seneca, New York 14224 (US); EVANS, Stanley Paul, Tinley Park, Illinois 60477 (US); MOSHER, Scott D., New York 14521 (US); KERBACK, Christopher C., Woodridge, Illinois 60517 (US); LITORIYA, Mrinalini, Hyderabad Telangana (IN)
(74) Representative: Wörz, Volker Alfred
(86) International application number: PCT/US2021/057976
(87) International publication number: WO 2022/098814

(56) References cited:
- EP-A2- 0 718 017
- WO-A1-2010/149787
- SU-A1- 617 045
- US-A- 3 529 719
- US-A- 3 645 398
- US-A- 3 847 813
- US-A1- 2001 042 441
- US-A1- 2004 256 325
- US-A1- 2007 028 571
- US-A1- 2018 169 544

## Description

### CROSS-REFERENCE TO RELATED APPLICATION

This application claims benefit to provisional patent application serial no. 63/109,472, filed 4 November 2020.

### BACKGROUND OF THE INVENTION

### 1. Field of the Invention

The present invention relates to a coalescing media; and more particularly relates to a coalescing media for a hydronic air and sediment separation device.

### 2. Brief Description of Related Art

Coalescing removal separators are devices typically installed on hydronic HVAC systems to remove entrained gases (such as air) and solid particles (such as iron oxide) from the fluid flowing through the system. Gasses trapped in a hydronic system lead to potentially harmful corrosion. Solid particulates collect into sediment that can foul moving components in pumps or valves and damage sensors in the system.

Coalescing removal separators work by passing the system fluid into a tank, through a coalescent media, and back to the system. The action of passing the fluid through the coalescent media enables the entrained gasses and particles to be removed from the system. The coalescent media disrupts the fluid flow and slows the fluid velocity, which allows gas bubbles to come out of solution and, through their natural buoyancy, float to the top of the separator tank to be vented out of the system. Likewise, the reduction in fluid velocity allows solids in the fluid, which are heavier than the system fluid, to come out of solution and drop to the bottom of the tank to be later removed through a blow-down action. The blow-down action involves opening a valve at the bottom of the removal separator tank to atmosphere, utilizing the difference between atmospheric pressure and the system pressure inside the separator tank to force out the solid contaminants that have come out of solution as they passed through the coalescing media. The coalescent media also provides a surface for dissolved gasses and solids to collect, or coalesce, around. As more dissolved gas or solids pass through the media pack, the molecules will continue to coalesce until they are either buoyant enough to float to the top or heavy enough to drop to the bottom. An example of a coalescer with perforated corrugated sheets is disclosed in EP0718017A2.

### Shortcomings of the Above Mentioned Known Devices:

One problem with current coalescing removal separator media is that they significantly increase the pressure drop of the unit, which can negatively impact the overall system efficiency. Another issue is that they may not effectively remove gasses or solids due to their designs.

In view of the aforementioned, there is a need in the industry for a better coalescing media for a hydronic air and sediment separation device.

### SUMMARY OF THE INVENTION

The present invention provides a new and unique coalescing separator media that improves the pressure drop characteristics across the separator while improving the ability of the device to more effectively remove gasses and solids from the system fluid. By way of example, this media consists of a series of vertically aligned corrugated perforated sheets, e.g., made from stainless steel, arranged such that they fill a large portion of the volume of the separator tank. The corrugated sheets are assembled to each other peak-to-peak and crest-to-crest. The perforated and corrugated sheets have an open area of 58% or greater, which facilitate the improved pressure drop characteristics.

The fluid flows through the corrugated media makes contact with the face of the perforated material to slow down the fluid velocity, enabling the entrained gasses and solids to come out of solution and either rise or sink, respectively. The perforations of the corrugated sheet media provide multiple surfaces for dissolved gasses and solids to coalesce around.

The vertically aligned corrugations of the coalescing media may serve several purposes.

For example, the angled corrugations direct the fluid to pass through the coalescing media where the greatest surface contact could occur. Likewise, as the fluid has completed its pass through the coalescing media, the angled corrugations direct the fluid to the discharge nozzle to leave the separator, and allow the pressure drop to recover. These motions help reduce the overall pressure drop of the coalescing separator, compared to different designs.

Second, the vertically aligned corrugations are rigid and resist the compressive forces that the coalescing media would be subject to over the course of its operational lifetime. They are also resistant to any rotation.

The corrugated coalescing separator media is to be retained within the separator tank by a tank head at the top and at least one retaining bar at the bottom. This provides sufficient open area to permit gas bubbles to rise to the top of the separator and solids to fall to the bottom.

### Specific Embodiments

According to some embodiments, the present invention may take the form of apparatus featuring a coalescing removal separator having a combination of a separator tank and a coalescing media, as further defined in claim 1.

The series of vertically aligned corrugated perforated sheets may be made from a metallic material, such as stainless steel.

The series of vertically aligned corrugated perforated sheets have peaks and crests, and are assembled to each other peak-to-peak and crest-to-crest.

The series of vertically aligned corrugated perforated sheets have an open area of about 58% or greater, which facilitates an associated pressure drop characteristics.

The series of vertically aligned corrugated perforated sheets may have perforations that provide multiple surfaces for dissolved gasses and solids to coalesce around.

The series of vertically aligned corrugated perforated sheets may have angled corrugations that direct the fluid to pass through the coalescing media where greatest surface contact occurs.

As the fluid has completed its pass through the coalescing media, the angled corrugations may direct the fluid to the separator output to leave the coalescing removal separator and allow a pressure drop to recover.

The series of vertically aligned corrugated perforated sheets may have vertically aligned corrugations that are rigid and resist compressive and/or rotation forces that the coalescing media is subject to within the separator tank.

The separator tank may include a top portion having a tank head configured to retain a corresponding bottom portion of the coalescing media; and a bottom portion having at least one retaining bar configured to retain a corresponding top portion of the coalescing media.

The top portion and the bottom portion may be configured to provide a sufficient open area to permit gas bubbles to rise to the top of the separator tank and solids to fall to the bottom of the separator tank.

The apparatus is, or take the form of, an HVAC system.

### BRIEF DESCRIPTION OF THE DRAWING

The drawing, which is not necessarily drawn to scale, includes the following Figures:
Figure 1 is a perspective view of coalescing media having rectangular corrugation, according to some embodiments of the present invention.
Figure 2 is a side cross-sectional view of a hydronic air and sediment separation device having coalescing media arranged therein, according to some embodiments of the present invention.

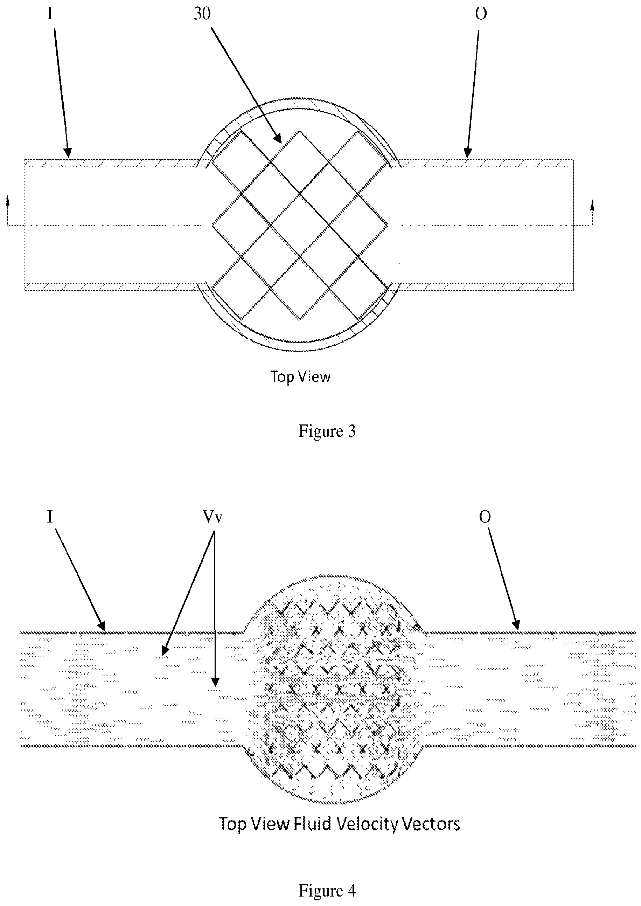

Figure 3 is a top cross-sectional view of the hydronic air and sediment separation device shown in Figure 2 along lines 3-3.
Figure 4 is a top cross-sectional view of the hydronic air and sediment separation device shown in Figure 3 showing fluid velocity vectors Vv as the fluid passes through the separator tank having the coalescing media arranged therein.

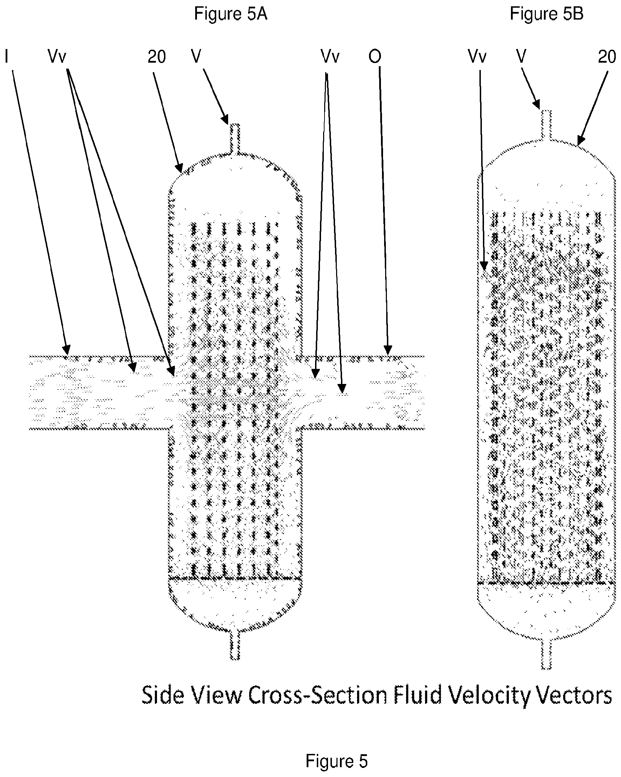

Figure 5 includes Figures 5A and 5B, where Figure 5A is a front side cross-sectional view of the hydronic air and sediment separation device shown in Figure 2 showing fluid velocity vectors; and where Figure 5B is a right side cross-sectional view of the hydronic air and sediment separation device shown in Figure 2 showing fluid velocity vectors.
Figure 6A is a side view of an individual corrugation that forms part of the coalescing media shown in Figure 1.
Figure 6B is a top down view of the individual corrugation shown in Figure 6A.
Figure 7 is a diagram the hydronic air and sediment separation device having the coalescing media arranged therein, according to some embodiments of the present invention.
Figure 8 is a diagram of flow in relation to coalescing media having hexagon corrugations, according to some embodiments of the present invention.
Figure 9 is a diagram of flow in relation to coalescing media also having hexagon corrugations different than that shown in Figure 8 and forming a honeycomb configuration, according to some embodiments of the present invention.
Figure 10 includes Figures 10A and 10B having alternative corrugation profiles forming honeycomb configurations, where Figure 10A is a diagram of coalescing media having a honeycomb configuration, according to some embodiments of the present invention; and where Figure 10B is a diagram of coalescing media having a honeycomb configuration, according to some embodiments of the present invention.
Figure 11 is a block diagram of an HVAC system having a coalescing removal separator, according to some embodiments of the present invention.

Similar parts or components in Figures are labeled with similar reference numerals and labels for consistency. Every lead line and associated reference label for every element is not included in every Figure of the drawing to reduce clutter in the drawing as a whole.

### DETAILED DESCRIPTION OF THE INVENTION

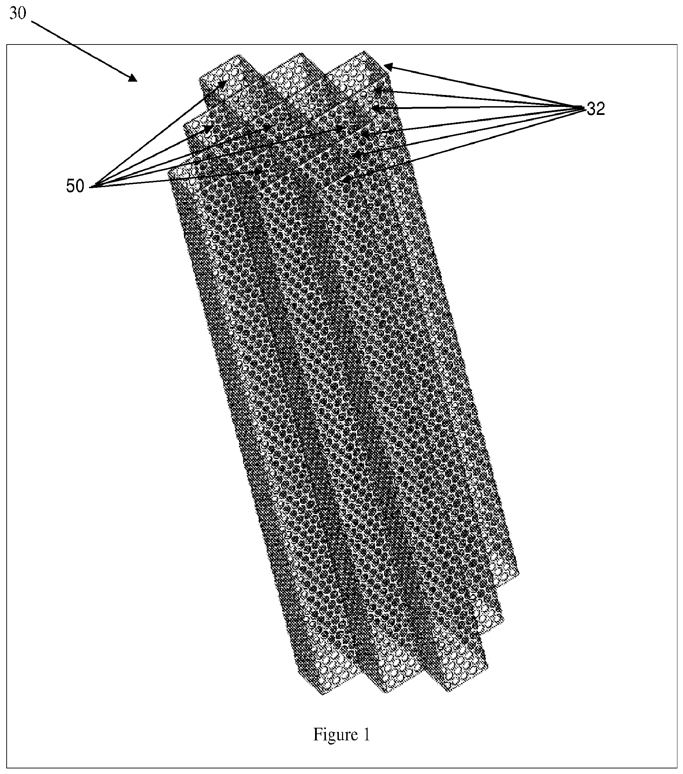

According to some embodiments, the present invention may take the form of apparatus featuring a coalescing removal separator generally indicated as 10 having a combination of a separator tank 20 and a coalescing media 30, e.g., as shown in Figures 1-2.

The separator tank 20 has a separator input I configured to receive a fluid flowing through a system having entrained gas and solid particles G/P, has a tank wall 22 configured to form a volume/chamber 24 inside the separator tank 20 to process the fluid F, and has a separator output O configured to provide processed fluid F having at least some, most or substantially all of the entrained gas and solid particles G/P removed.

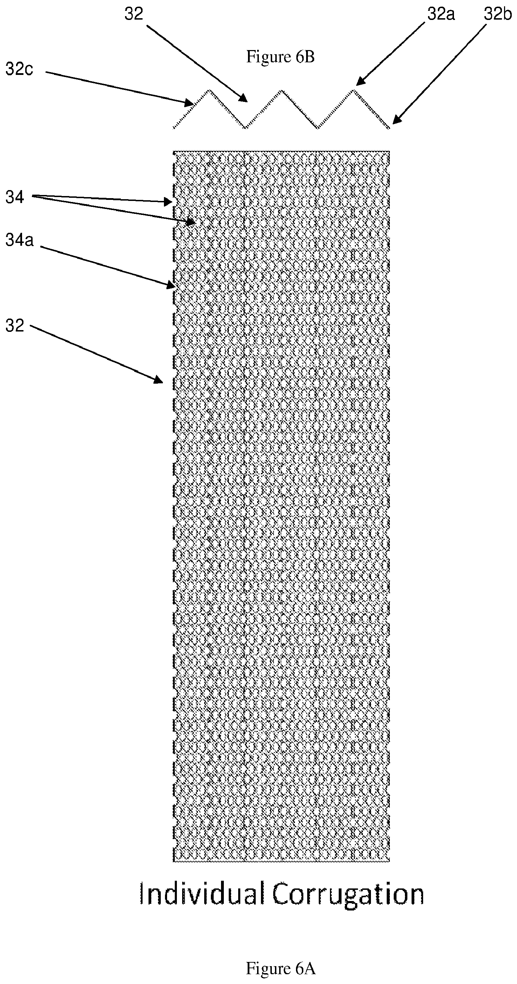

The coalescing media 30 is arranged in the volume/chamber 24 of the separator tank 20, has a series of vertically aligned corrugated perforated sheets 32 (see Fig. 6A, 6B) substantially filling the volume/chamber 24 of the separator tank 20 and is configured to remove the at least some, most or substantially all of the entrained gas and solid particles G/P from the fluid F.

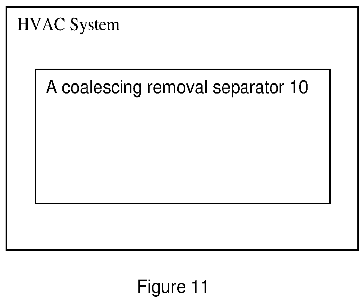

By way of example, the apparatus may take the form of an HVAC system (Fig. 11) having the coalescing removal separator.

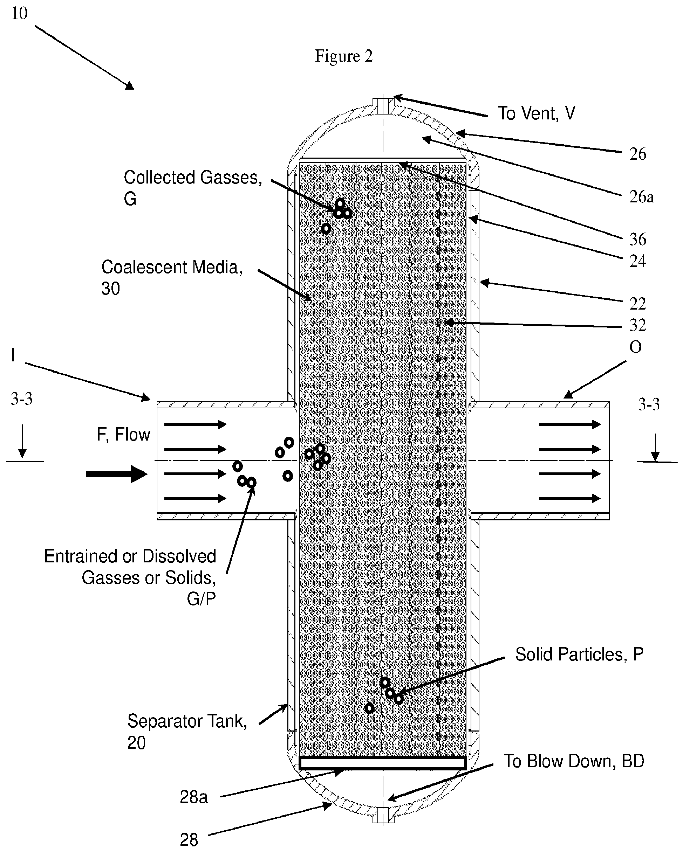

Figure 1 shows the coalescing media 30 having a series of six (6) vertically aligned corrugated perforated sheets 32, e.g., according to some embodiments of the present invention. Each vertically aligned corrugated perforated sheet 32 is also known herein as an individual corrugation as shown in Figures 6A and 6B. In Figure 2, all six (6) vertically aligned corrugated perforated sheets 32 are the same, e.g., including the same size, shape and dimension.

The series of vertically aligned corrugated perforated sheets 32 having the peaks 32a and crests 32b are assembled to each other peak-to-peak and crest-to-crest. In Figures 1, 2 and 6A and 6B, each vertically aligned corrugated perforated sheet 32 has three (3) peaks 32a, four (4) crests 32b and six (6) surfaces 32c inbetween. (The terms "peaks" and "crests" may be used interchangeably within the spirit of the invention.)

The series of vertically aligned corrugated perforated sheets 32 may have multiple openings or perforations 34 that provide multiple surfaces 34a for dissolved gasses G and solids or particles P to coalesce around. By way of example, and consistent with that shown in Figures 1, 2, 6A, 6B, the multiple openings or perforations 34 may be circular openings or perforations and the multiple surfaces 34a may be circular or cylindrical surfaces, e.g., so as to be uniformly configured on the vertically aligned corrugated perforated sheets 32. However, the scope of the invention is intended to include, and embodiments are envisioned that include, the multiple openings or perforations 34 and the multiple surfaces 34a having different types or kinds of shapes and surfaces within the spirit of the underlying invention, e.g., including a triangular shape and surface, a rectangular shape and surface, a square shape and surface, a hexagon shape and surface, etc. In other words, the scope of the invention is not intended to be limited to the shape of the opening or perforation 34 and its associated surface 34a. For example, in one type of application the multiple openings or perforations 34 may have one shape and surface, while in another another application, the multiple openings or perforations 34 may have another shape and surface, as one skilled in the art would appreciate.

Moreover, and by way of further example, and consistent with that shown in Figures 1, 2, 6A, 6B, the multiple openings or perforations 34 may be configured or dimensioned having the same size, e.g., so as to be uniformly distributed on the vertically aligned corrugated perforated sheets 32. However, the scope of the invention is intended to include, and embodiments are envisioned that include, the multiple openings or perforations 34 having different sizes within the spirit of the underlying invention. Moreover, the scope of the invention is not intended to be limited to the size of the multiple openings or perforations 34, e.g., which may be configured or dimensioned with a particular size based upon a particular application as one skilled in the would appreciate. For example, in one type of application the multiple openings or perforations 34 may have one size or dimension, while in another another application, the multiple openings or perforations 34 may have another and different size or dimension.

Moreover still, and by way of still further example, and consistent with that shown in Figures 1, 2, 6A, 6B, the multiple openings or perforations 34 may be configured, dimensioned or spaced in relation to one another having the same distance inbetween, e.g., so as to be uniformly distributed on the vertically aligned corrugated perforated sheets 32. However, the scope of the invention is intended to include, and embodiments are envisioned that include, the multiple openings or perforations 34 having different distances inbetween within the spirit of the underlying invention. Moreover, the scope of the invention is not intended to be limited to any particular distances inbetween the multiple openings or perforations 34, e.g., which may be configured or dimensioned with a particular distance inbetween based upon a particular application as one skilled in the would appreciate. For example, in one type of application the multiple openings or perforations 34 may have one distance inbetween, while in another application, the multiple openings or perforations 34 may have another and and different distance inbetween.

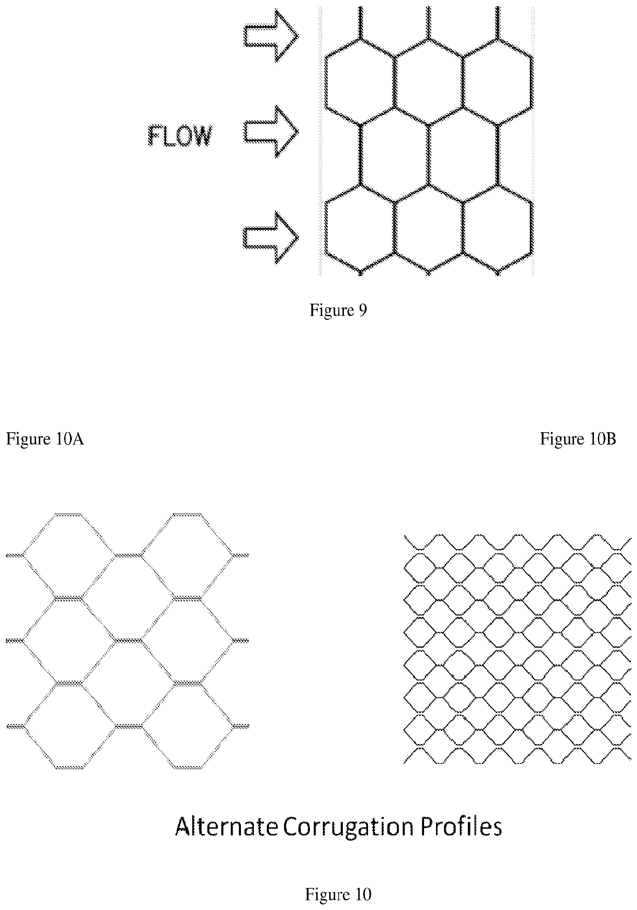

The series of vertically aligned corrugated perforated sheets 32 may have angled corrugations that direct the fluid to pass through the coalescing media 30 where greatest surface contact occurs. By way of example, and consistent with that shown in Figures 1, 2, 6A and 6B, the vertically aligned corrugated perforated sheets 32 have angled corrugations with a 90° angle (i.e. right angle). As the fluid has completed its pass through the coalescing media 30, the angled corrugations may direct the fluid to the separator output O to leave the coalescing removal separator 10 and allow a pressure drop to recover. However, the scope of the invention is intended to include, and embodiments are envisioned that include, the angled corrugations having a different angle within the spirit of the underlying invention. For example, the scope of the invention is intended to include, and embodiments are envisioned that include, the angled corrugations being more or less than 90°, e.g., so as to be configured or dimensioned with a particular angled corrugation based upon a particular application as one skilled in the would appreciate. For example, in one type of application the angled corrugation may have one angle, while in another another application, the angled corrugation may have another and different angle. Moreover, and by way of further example, Figure 9 shows a coalescing media having vertically aligned corrugated perforated sheets with angles greater than 90° so as to form a honeycomb configuration, e.g., with an angle of about 120°.

The series of vertically aligned corrugated perforated sheets 32 may have vertically aligned corrugations that are rigid and resist compressive and/or rotation forces that the coalescing media 30 is subject to within the separator tank 20. By way of example, the series of vertically aligned corrugated perforated sheets 32 may be made from a metallic material, such as stainless steel. However, the scope of the invention is intended to include, and embodiments are envisioned that include, the series of vertically aligned corrugated perforated sheets 32 being made from other types or kinds of material, e.g., including other metal or non-metallic material within the spirit of the underlying invention. For example, in one type of application the series of vertically aligned corrugated perforated sheets 32 may be made from one type of material, while in another application, the series of vertically aligned corrugated perforated sheets 32 may be made from one another and different material, e.g., as one skilled in the art would appreciate.

The separator tank 20 may include a top portion 26 having a tank head 26a configured to retain a corresponding top portion 36 of the coalescing media 30; and a bottom portion 28 having at least one retaining bar 28a configured to retain a corresponding bottom portion 38 of the coalescing media 30.

The at least one retaining bar 28a may include two or more retainer bars 28a, e.g., depending on the application. For example, in one application, one retainer bar 28 may be configured to retain the corresponding bottom portion 38 of the coalescing media 30, while in another application, two or more retainer bars 28a may be configured to retain the corresponding bottom portion 28 of the coalescing media 30. The scope of the invention is not intended to be limited to the number of retainer bars used to retain the corresponding bottom portion 38 of the coalescing media 30.

The top portion 26 and the bottom portion 28 may be configured to provide a sufficient open area to permit gas bubbles G to rise to the top of the separator tank 20 and solids or particles P to fall to the bottom of the separator tank 20. In Figure 2, the separator tank 20 also may include a vent V configured or formed in the top portion 26 for providing the gas bubbles G from the separator tank 20, and may include a blow-down BD configured or formed in the bottom portion 28 for providing the solids or particles P from the separator tank 20.

The series of vertically aligned corrugated perforated sheets 32 have an open area of about 58% or greater, which facilitates an associated pressure drop characteristics. The open area may be configured or formed by the openings generally indicated by 50 (Fig. 1) configured or formed between the series of six vertically aligned corrugated perforated sheets 32. Figure 1 includes arrows pointing to five (5) of the thirteen (13) openings configured or formed between the series of six vertically aligned corrugated perforated sheets 32.

### Figure 7

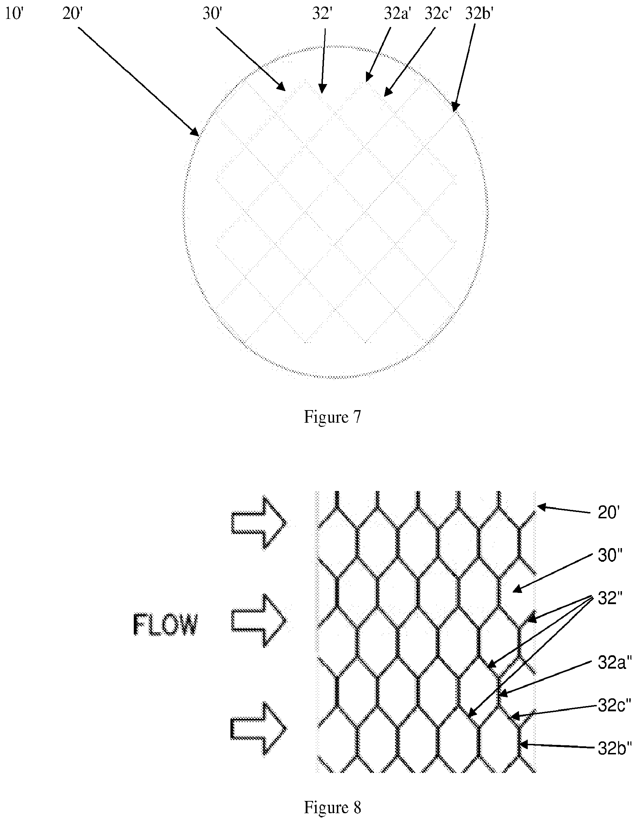

Figure 7 shows a hydronic air and sediment separation device 10' having a separator tank 20' with a coalescing media 30' arranged therein, according to some embodiments of the present invention. In Figure 7, the coalescing media 30' has eight (8) vertically aligned corrugated perforated sheets 32', each having four (4) peaks 32a', five (5) crests 32b' and eight (8) surfaces 32c' inbetween.

### Figure 8

Figure 8 shows a separator tank 20" having a coalescing media 30" arranged therein with hexagon corrugations, according to some embodiments of the present invention. In Figure 8, the coalescing media 30' has eleven (11) vertically aligned corrugated perforated sheets 32", each having corresponding peaks 32a", crests 32b"and surfaces 32c" inbetween configured in a honeycomb formation having a peak-to-peak and crest-to-crest assembly.

## Claims

1. Apparatus comprising:
a coalescing removal separator (10) that includes:
a separator tank (20) having a separator input (I) configured to receive a fluid (F) flowing through a system having entrained gas and solid particles (G/P), having a tank wall (22) configured to form a volume or chamber (24) inside the separator tank (20) to process the fluid (F), and having a separator output (O) configured to provide processed fluid (F) having at least some, most or substantially all of the entrained gas and solid particles (G/P) removed; and
a coalescing media (30) arranged in the volume or chamber (24) of the separator tank (20), the coalescing media (30) having a series of vertically aligned corrugated perforated sheets (32) substantially filling the volume or chamber (24) of the separator tank (20) and configured to remove the at least some, most or substantially all of the entrained gas and solid particles (G/P) from the fluid (F),
**characterized by** the fact that
the coalescing media (30) has a series of six vertically aligned corrugated perforated sheets (32), wherein the perforated sheets (32) are the same and wherein each vertically aligned corrugated perforated sheet (32) has three peaks (32a), four crests (32b) and six surfaces (32c) in between, and wherein the six vertically aligned corrugated perforated sheets (32) are assembled to each other peak-to-peak and crest-to-crest, or
the coalescing media (30') has a series of eight vertically aligned corrugated perforated sheets (32'), wherein each vertically aligned corrugated perforated sheet (32') has four peaks (32a'), five crests (32b') and eight surfaces (32c') in-between, and wherein a peak (32a') of one of the vertically aligned corrugated perforated sheets (32') is assembled to a crest (32b') of another one of the vertically aligned corrugated perforated sheets (32'), or
the coalescing media (30") has a series of eleven vertically aligned corrugated perforated sheets (32"), wherein each vertically aligned corrugated perforated sheet (32") has corresponding peaks (32a"), crests (32b") and surfaces (32c") in-between configured in a honeycomb formation having a peak-to-peak and crest-to-crest assembly
wherein the series of vertically aligned corrugated perforated sheets (32) have an open area of about 58% or greater, which facilitates associated pressure drop characteristics.

2. Apparatus according to claim 1, wherein the series of vertically aligned corrugated perforated sheets (32) are made from stainless steel.

3. Apparatus according to one of the preceding claims, wherein the series of vertically aligned corrugated perforated sheets (32) have perforations (34) that provide multiple surfaces (34a) for dissolved gasses (G) and solids (P) to coalesce around.

4. Apparatus according to one of the preceding claims, wherein the series of vertically aligned corrugated perforated sheets (32) have angled corrugations that are configured to direct the fluid (F) to pass through the coalescing media (30) where greatest surface contact occurs.

5. Apparatus according to claim 4, wherein the angled corrugations are configured to direct the fluid to the separator output (O) to leave the coalescing removal separator (10) and allow a pressure drop to recover, once the fluid (F) has completed its pass through the coalescing media (30).

6. Apparatus according to claim 1, wherein the series of vertically aligned corrugated perforated sheets (32) have vertically aligned corrugations that are rigid and resist compressive and/or rotation forces that the coalescing media is subject to within the separator tank.

7. Apparatus according to one of the preceding claims, wherein the separator tank (20) comprises:
a top portion (26) having a tank head (26a) configured to retain a corresponding top portion (36) of the coalescing media (30); and
a bottom portion (28) having at least one retaining bar (28a) configured to retain a corresponding bottom portion (38) of the coalescing media (30).

8. Apparatus according to claim 7, wherein the top portion (26) and the bottom portion (28) are configured to provide a sufficient open area to permit gas bubbles (G) to rise to the top of the separator tank (20) and solids (P) to fall to the bottom of the separator tank (20).

9. Apparatus according to one of the preceding claims, wherein the apparatus is, or takes the form of an HVAC system, having the coalescing removal separator (10).

## Patentansprüche

1. Vorrichtung, umfassend:
einen Koaleszenz-Abscheider (10), der umfasst:
einen Abscheidebehälter (20) mit einem Abscheideeinlass (I), der ausgebildet ist, ein durch ein System strömendes Fluid (F) aufzunehmen, das gasförmige und feste Partikel (G/P) enthält, mit einer Behälterwand (22), die ausgebildet ist, ein Volumen oder eine Kammer (24) innerhalb des Abscheidebehälters (20) zu bilden, um das Fluid (F) zu verarbeiten, und mit einem Abscheideauslass (O), der ausgebildet ist, verarbeitetes Fluid (F) bereitzustellen, aus dem zumindest ein Teil, die meisten oder im Wesentlichen alle mitgeführten gasförmigen und festen Partikel (G/P) entfernt wurden; und
ein Koaleszenzmedium (30), das in dem Volumen oder der Kammer (24) des Abscheidebehälters (20) angeordnet ist, wobei das Koaleszenzmedium (30) eine Anzahl von vertikal ausgerichteten, gewellten, perforierten Blechen (32) aufweist, die das Volumen oder die Kammer (24) des Abscheidebehälters (20) im Wesentlichen ausfüllen und ausgebildet sind, zumindest einen Teil, die meisten oder im Wesentlichen alle mitgeführten gasförmigen und festen Partikel (G/P) aus dem Fluid (F) zu entfernen,
**dadurch gekennzeichnet, dass**
das Koaleszenzmedium (30) eine Anzahl von sechs vertikal ausgerichteten, gewellten, perforierten Blechen (32) aufweist, wobei die perforierten Bleche (32) identisch sind und wobei jedes vertikal ausgerichtete, gewellte, perforierte Blech (32) drei Erhöhungen (32a), vier Vertiefungen (32b) und sechs dazwischenliegende Flächen (32c) aufweist, und wobei die sechs vertikal ausgerichteten gewellten perforierten Bleche (32) Erhöhung an Erhöhung und Vertiefung an Vertiefung miteinander verbunden sind, oder
das Koaleszenzmedium (30') eine Anzahl von acht vertikal ausgerichteten gewellten, perforierten Blechen (32') aufweist, wobei jedes vertikal ausgerichtete gewellte perforierte Blech (32') vier Erhöhungen (32a'), fünf Vertiefungen (32b') und acht dazwischenliegende Flächen (32c') aufweist, und wobei eine Erhöhung (32a') eines der vertikal ausgerichteten gewellten, perforierten Bleche (32') mit einer Vertiefung (32b') eines anderen der vertikal ausgerichteten gewellten, perforierten Bleche (32') verbunden ist, oder
das Koaleszenzmedium (30") eine Anzahl von elf vertikal ausgerichteten gewellten, perforierten Blechen (32") aufweist, wobei jedes vertikal ausgerichtete gewellte, perforierte Blech (32") entsprechende Erhöhungen (32a"), Vertiefungen (32b") und dazwischenliegende Flächen (32c") aufweist, die in einer Wabenformation angeordnet sind, die eine Verbindung von Erhöhung zu Erhöhung und von Vertiefung zu Vertiefung aufweist,
wobei die Anzahl von vertikal ausgerichteten gewellten, perforierten Blechen (32) eine offene Fläche von etwa 58 % oder mehr aufweist, was die zugeordneten Druckabfallcharakteristika begünstigt.

2. Vorrichtung nach Anspruch 1, wobei die Anzahl von vertikal ausgerichteten gewellten, perforierten Blechen (32) aus Edelstahl gefertigt sind.

3. Vorrichtung nach einem der vorhergehenden Ansprüche, wobei die Anzahl von vertikal ausgerichteten gewellten, perforierten Blechen (32) Perforationen (34) aufweist, die mehrere Oberflächen (34a) bereitstellen, um die herum gelöste Gase (G) und Feststoffe (P) koaleszieren können.

4. Vorrichtung nach einem der vorhergehenden Ansprüche, wobei die Anzahl von vertikal ausgerichteten, gewellten, perforierten Blechen (32) abgewinkelte Wellen aufweist, die ausgebildet sind, das Fluid (F) so zu leiten, dass es durch das Koaleszenzmedium (30) strömt, wo der größte Oberflächenkontakt auftritt.

5. Vorrichtung nach Anspruch 4, wobei die abgewinkelten Wellen ausgebildet sind, das Fluid zu dem Abscheideauslass (O) zu leiten, damit es den Koaleszenz-Abscheider (10) verlässt und sich der Druckabfall wieder ausgleichen kann, sobald das Fluid (F) seinen Durchlauf durch das Koaleszenzmedium (30) abgeschlossen hat.

6. Vorrichtung nach Anspruch 1, wobei die Anzahl von vertikal ausgerichteten, gewellten, perforierten Blechen (32) vertikal ausgerichtete Wellen aufweist, die starr sind und den Druck- und/oder Drehkräften widerstehen, denen das Koaleszenzmedium innerhalb des Abscheidebehälters ausgesetzt ist.

7. Vorrichtung nach einem der vorhergehenden Ansprüche, wobei der Abscheidebehälter (20) umfasst:
einen oberen Abschnitt (26) mit einem Behälterdeckel (26a), der ausgebildet ist, einen entsprechenden oberen Abschnitt (36) des Koaleszenzmediums (30) zu halten; und
einen unteren Abschnitt (28) mit mindestens einer Halteleiste (28a), die ausgebildet ist, einen entsprechenden unteren Abschnitt (38) des Koaleszenzmediums (30) zu halten.

8. Vorrichtung nach Anspruch 7, wobei der obere Abschnitt (26) und der untere Abschnitt (28) ausgebildet sind, eine ausreichende offene Fläche bereitzustellen, damit Gasblasen (G) an die Oberseite des Abscheidebehälters (20) aufsteigen und Feststoffe (P) auf den Boden des Abscheidebehälters (20) absinken können.

9. Vorrichtung nach einem der vorhergehenden Ansprüche, wobei die Vorrichtung ein HLK-System ist oder die Form eines HLK-Systems annimmt, das den Koaleszenz-Abscheider (10) aufweist.

## Revendications

1. Dispositif comprenant :
un séparateur à élimination par coalescence (10) qui comprend :
un réservoir de séparation (20) comportant une entrée de séparateur (I) configurée pour recevoir un fluide (F) s'écoulant à travers un système contenant du gaz et des particules solides entraînés (G/P), comportant une paroi de réservoir (22) configurée pour former un volume ou une chambre (24) à l'intérieur du réservoir de séparation (20) afin de traiter le fluide (F), et comportant une sortie de séparateur (O) configurée pour fournir un fluide traité (F) dont au moins une partie, la plupart ou pratiquement la totalité des gaz et particules solides entraînés (G/P) ont été éliminés ; et
un milieu de coalescence (30) disposé dans le volume ou la chambre (24) du réservoir de séparation (20), le milieu de coalescence (30) comportant une série de tôles perforées ondulées (32) alignées verticalement, remplissant pratiquement tout le volume ou la chambre (24) du réservoir de séparation (20) et configurées pour éliminer au moins une partie, la plupart ou pratiquement la totalité des gaz et particules solides entraînés (G/P) du fluide (F),
**caractérisé par le fait que**
le milieu de coalescence (30) comporte une série de six tôles ondulées perforées (32) alignées verticalement, les tôles perforées (32) étant identiques et chaque tôle ondulée perforée (32) alignée verticalement présentant trois pics (32a), quatre crêtes (32b) et six surfaces (32c) entre celles-ci, et dans lequel les six tôles ondulées perforées (32) alignées verticalement sont assemblées les unes aux autres pic contre pic et crête contre crête, ou
le milieu de coalescence (30') comporte une série de huit tôles ondulées perforées (32') alignées verticalement, chaque tôle ondulée perforée (32') alignée verticalement comportant quatre pics (32a'), cinq crêtes (32b') et huit surfaces (32c') entre celles-ci, et dans lequel un pic (32a') de l'une des tôles ondulées perforées (32') alignées verticalement est assemblé à une crête (32b') d'une autre des tôles ondulées perforées (32') alignées verticalement, ou
le média de coalescence (30") comporte une série de onze tôles ondulées et perforées (32") alignées verticalement, dans laquelle chaque tôle ondulée et perforée (32") alignée verticalement présente des pics correspondants (32a"), des crêtes (32b") et des surfaces (32c") intermédiaires, agencées selon une structure en nid d'abeille présentant un assemblage pic à pic et crête à crête,
dans lequel la série de tôles ondulées perforées (32) alignées verticalement présente une surface ouverte d'environ 58 % ou plus, ce qui favorise les caractéristiques de perte de charge associées.

2. Dispositif selon la revendication 1, dans lequel la série de tôles ondulées et perforées (32) alignées verticalement est réalisée en acier inoxydable.

3. Dispositif selon l'une des revendications précédentes, dans lequel la série de tôles ondulées et perforées (32) alignées verticalement présente des perforations (34) qui fournissent de multiples surfaces (34a) autour desquelles les gaz dissous (G) et les solides (P) peuvent se coalescer.

4. Dispositif selon l'une des revendications précédentes, dans lequel la série de tôles ondulées et perforées (32) alignées verticalement présente des ondulations inclinées configurées pour diriger le fluide (F) de manière à ce qu'il traverse le milieu de coalescence (30) là où le contact de surface est le plus important.

5. Dispositif selon la revendication 4, dans lequel les ondulations inclinées sont configurées pour diriger le fluide vers la sortie du séparateur (O) afin qu'il quitte le séparateur à élimination par coalescence (10) et permette à la chute de pression de se rétablir, une fois que le fluide (F) a achevé son passage à travers le milieu de coalescence (30).

6. Dispositif selon la revendication 1, dans lequel la série de tôles ondulées et perforées (32) alignées verticalement présente des ondulations alignées verticalement qui sont rigides et résistent aux forces de compression et/ou de rotation auxquelles le milieu de coalescence est soumis à l'intérieur du réservoir de séparation.

7. Dispositif selon l'une des revendications précédentes, dans lequel le réservoir de séparation (20) comprend :
une partie supérieure (26) comportant une tête de réservoir (26a) configurée pour retenir une partie supérieure correspondante (36) du milieu de coalescence (30) ; et
une partie inférieure (28) comportant au moins une barre de retenue (28a) configurée pour retenir une partie inférieure correspondante (38) du milieu de coalescence (30).

8. Dispositif selon la revendication 7, dans lequel la partie supérieure (26) et la partie inférieure (28) sont configurées pour offrir une surface ouverte suffisante afin de permettre aux bulles de gaz (G) de remonter vers le haut du réservoir de séparation (20) et aux solides (P) de descendre vers le fond du réservoir de séparation (20).

9. Dispositif selon l'une des revendications précédentes, dans lequel le dispositif est, ou prend la forme d'un système CVC, comportant le séparateur à élimination par coalescence (10).
